Europäisches Patentamt

European Patent Office

Office européen des brevets

(11) Publication number: **0 080 477**
**B1**

⑱

(12) **EUROPEAN PATENT SPECIFICATION**

(45) Date of publication of patent specification: **05.02.86**

(21) Application number: **82901629.4**

(22) Date of filing: **27.05.82**

(86) International application number:
**PCT/NO82/00029**

(87) International publication number:
**WO 82/04360 09.12.82 Gazette 82/29**

(51) Int. Cl.⁴: **H 02 G 3/08,** H 02 B 9/00,
H 02 B 1/18

(54) **DISTRIBUTION BOARD FOR ELECTRICAL INSTALLATIONS.**

(30) Priority: **01.06.81 NO 811846**

(43) Date of publication of application:
**08.06.83 Bulletin 83/23**

(45) Publication of the grant of the patent:
**05.02.86 Bulletin 86/06**

(84) Designated Contracting States:
**AT BE CH DE FR GB LI LU NL SE**

(56) References cited:
**DE-A-2 943 172**
**FR-A-2 333 367**

(73) Proprietor: **PEDERSEN, Arild B**
**Brattekleiv**
**N-4818 Pusnes (NO)**

(72) Inventor: **PEDERSEN, Egil**
**Brattekleiv**
**N-4818 Pusnes (NO)**

(74) Representative: **Wennborg, Göte et al**
**KRANSELL & WENNBORG AB Sandhamnsgatan**
**42**
**S-115 28 Stockholm (SE)**

**Description**

The present invention relates to a distribution board for electrical installations in which an incoming three phase system is distributed to single-phase and three-phase branch circuits, comprising a bus bar system which allows for a sequential alteration of the phases of adjacent connection points.

There are previously known distribution boards for electrical installations in which the incoming three-phase system is branched out or distributed via fuse elements or automatic fuses to appropriate single-phase and three-phase branch circuits. Such distribution boards are today mounted on the site of the installation where the electrician must put together each individual element or automatic fuse and also connect the current supply to the bottom screw of the element or automatic fuse, respectively. When distributing the individual branch circuits the electrician must watch that the incoming phases are loaded as evenly as possible.

FR—A—2 333 367 (Berthillot) refers to a connection box or a distribution box, which in electrical installations has a different function than a distribution board. In this connection box the phases are alternated sequentially both along the rows and the columns of the connection points. This citation, however, is silent as to how such a sequential pattern could be implemented to avoid short-circuitry between some of the phases if used in a three-phase system.

The object of the present invention is to provide a distribution board for electrical three-phase installations which does not suffer from the disadvantage involving an uneven loading of the phases R, S and T taking place during the installation. Another object of the present invention is to provide a distribution board which makes the bottom connection to each fuse element or automatic fuse superfluous, thereby reducing the possibility of poor contact and thereby the risk of heat development in the element to a minimum. Yet another object of the invention is to provide a distribution board having physical dimensions which are less than those of known boards constructed from hitherto known elements.

These objects are achieved in connection with a distribution board of the type stated in the preamble, which according to the invention is characterized in that the connection points are arranged at the intersections of a notional grid to form rows and columns of three-phase connection points, and that the bus bar system includes bus bar elements for each of the three phases which run from an edge connection point diagonally to the adjacent connection point, so as to connect normally three, but in any case at least two diagonally arranged connection points along the same straight line before possibly changing direction, so that the three phases are alternated sequentially in the three-phase system, both along all the rows and all the columns of the connection points.

By means of such a distribution board or board module the electrician can during the electrical installation in a bungalow or a larger building refrain from dividing the installation between the phases R, S and T as this division is already effected by means of the bus system included in the board module.

Besides, the bottom of the fuse elements are preconnected to the above-mentioned bus system, and it is thereby possible to avoid the dangers associated with heat development coming about in known distribution boards in which unsafe connection at the bottom of the elements can exist. In the present distribution board between the bus bar system and the bottom of the elements there is only one connection for each phase, irrespective of how many elements are included in each board module.

The above-mentioned FR—A—2 333 367 (cf. Fig. 6) already suggests a zigzag system of bus bars between the various connection points 24, 30, 26, 28 etc., and 31, 25, 29, 27, respectively, but this zigzag pattern cannot readily be changed to cover three connection points of different phases, because the intermediate connection point 32 and 33 have a horizontal connection strap therebetween.

In a preferred embodiment the distribution board is designed as a complete module the bus bar system being preconnected and comprising fuse holders and fuse elements.

The invention will in the following be further described, reference being had to the drawing, which illustrates an embodiment of the distribution board according to the invention.

On the drawing there is illustrated an exploded isometric view of an embodiment of a distribution board according to the invention,

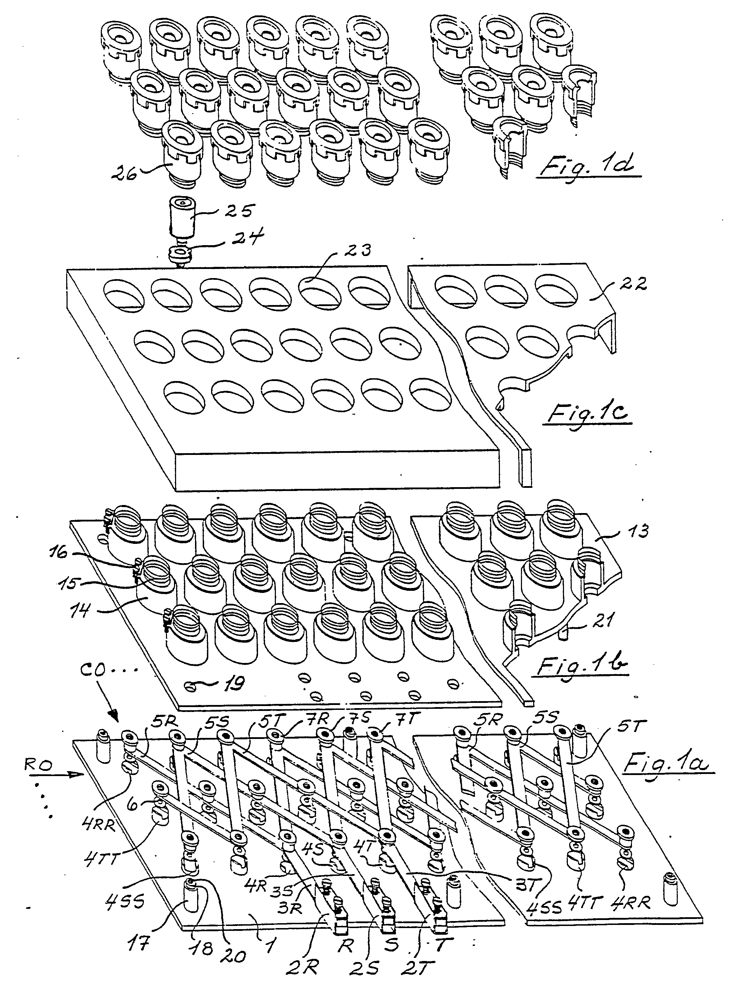

Fig. 1a illustrating a bottom plate carrying zigzag-shaped bus systems,

Fig. 1b illustrating a connection plate of electrical insulating material carrying fuse element holders with connection points for the conductor runs,

Fig. 1c illustrating a cover for screening off the charged points of the plate according to Fig. 1b and allowing access to the portions of the elements holding the fuses, and

Fig. 1d illustrating fuse caps serving to retain the fuses in the fuse elements of Fig. 1b.

On the drawing there appears an embodiment of the distribution board for electrical installations according to the invention, a bottom plate 1 of electrical insulating material being depicted in Fig. 1a. On the bottom plate 1 there are provided three main connection clamps, 2R, 2S and 2T, respectively, which are connected to a not illustrated incoming three-phase system symbolized by the designations R, S and T.

Connection straps 3R, 3S and 3T, respectively, extend from the clamps 2R, 2S and 2T, and are at the ends opposite the clamps supported by guiding studs 4R, 4S, 4T of different heights. Thus, the strap 3R is supported by a stud 4R of relatively small height, whereas the strap 3S is supported by a guiding stud 4S of medium height and the strap 32 is supported by a guiding stud 4T, which is higher than the previously mentioned studs. The reason for giving the studs 4R, 4S and 4T different heights, is that the respective straps 3R, 3S and 3T are connected to their own zigzag-shaped bus bar elements 5R, 5S and 5T, respectively, which at a certain distance are crossing each other, the bus bar elements 5R being supported on a plurality of guiding studs 4RR having a height corresponding to that of the guiding stud 4R, the bus bar elements 5S being supported on guiding studs 4SS having heights corresponding to the guiding studs 4S, and the bus bar elements 5T being supported on high studs 4TT corresponding to the studs 4T. The above-mentioned bus bar elements 5R, 5S and 5T are so designed that when being connected to the straps 3R, 3S and 3T, they distribute the three incoming phases R, S and T in rows RO and columns CO of branch circuit connection points so that the phases R, S and T are alternated sequentially both along the rows RO and the columns CO of connection points. Between every stud in the respective bus system and the buses themselves there is mounted a bimetallic disc 6 serving to provide a temperature dependent pressure against the bus bars 5R, 5S, 5T from the respective guiding studs 4RR, 4SS, 4TT. In the area of the guiding studs there are on the buses 5R, 5S, 5T provided sleeve-shaped contact pieces 7R, 7S, 7T, in which there is provided a threaded portion into which the bottom screw of a fuse element can be screwed. The contact pieces 7R, 7S and 7T are of different heights, dependent on which phase they represent, the contact piece 7R having the greatest height, the contact piece 7S a medium height and the contact piece 7T the smallest height thereby together with the respective subjacent guiding studs 4RR, 4SS and 4TT, respectively, having their top surfaces at the same level above the bottom plate 1.

Upon assembly of the zigzag-shaped bus bar elements 5R, 5S and 5T the latter will run at different heights, but the connection points represented by the sleeve-shaped contact pieces 7R, 7S and 7T will be at the same height above the bottom plate 1.

Above the bus bar system there is mounted a connection plate 13, for example of the type illustrated in Fig. 1, onto which there are mounted fuse holders 14 having an upper threaded portion 15 with connection clamps 16. The fuse holders 14 can either be firmly molded to the connection plate 13 or be attached to said plate by other attachment means, for example screw connection or similar. The connection plate 13 is assembled on appropriate mounting bolts 17 arranged at the corners of the bottom plate 1. These bolts have top portions 18 which are adapted to corresponding recesses 19 in the connection plate 13. The connection plate 13 is screw connected to the bottom plate 1, for example by not illustrated screws fitting into the threaded portions 20 of the top portions 18 of the mounting bolts 17.

On the bottom side of the connection plate 13 are provided a plurality of supporting studs 21 which press against the zigzag-shaped bus elements 5R, 5S and 5T, so that these are held down on the guiding studs 4R, 4S and 4T with a suitable pressure.

Above the connection plate 13 there is mounted a top cover 22, for example of the type illustrated in Fig. 1c, which protects against touching live parts, namely the connection clamps 16 on the fuse holders 14 on the connection plate 13. In the top cover 22 there are provided a series of holes 23 the positions of which corresponds to the position of the fuse holders 14 on the connecting plate 13, thereby allowing an access to the fuse holders 14.

After the assembly of the bottom plate 1 and connecting plate 13 into a module, the latter can be mounted in an appropriate fuse board for connection to the individual branch circuits by connection clamps 16 on the fuse holders 14 of the connection plate 13. After the completion of these connections the top cover 22 can be put in position, whereafter the elements illustrated in Fig. 1d, namely the bottom screw 24, the fuse 25 and the fuse cover 26, can be put in position in their respective fuse holders 14, thus making the assembled distribution board ready for use.

Because the bus bar elements 5R, 5S and 5T pass along in a zigzag pattern as illustrated in Fig. 1, it is possible to choose between one-phase and three-phase branch circuits, either by using connection points in horizontal direction or in vertical direction, i.e. by going along either the rows RO or the columns CO. If the two first connection points in the horizontal direction are used for a one-phase branch circuit it is possible to use the three following connection points for a three-phase branch circuit or vice versa. In other words, in connection with the bus bar system according to the invention the phases R, S and T always will be present in the correct sequence in horizontal and vertical direction, so that the electrician does not have to think of which phase the connection point is connected to. Due to a smaller number of connections per phase, the risk of poor contact and thereby the risk of heat development in the connecting point is avoided.

If the three first connecting points in the vertical direction are used for a three-phase branch circuit, the next three connecting points in horizontal direction can be used for a further three-phase branch circuit. This means that connecting points for the outgoing branch circuits can be connected both in the one-phase and three-phase way without taking into account how the phases R, S and T are mounted.

The cyclic alteration of the phases will always give the correct phases independent of which elements have been used previously.

The present distribution board also reduces the assembly work for the electrician, and the physical dimensions of the new board are smaller compared with those of known boards.

A distribution board according to the invention can be implemented with other elements and other locations thereof than what has been illustrated in the drawing. For example, the zigzag-shaped bus systems can be expanded to involve not only three columns but for example four, five or six. When using six columns, two such systems as illustrated in Fig. 1a, may appropriately be built together, but the bus bar elements must not necessarily have a strict zigzag-form, but can include extensions at suitable locations thereof, such extensions with their points of contacts also giving an alternating sequence of the phases R, S, T in the same manner as illustrated in the example of Fig. 1a.

A distribution board according to the invention can also include main fuses, the connection to the individual bus bar elements would then be accomplished from the connection clamps via the main fuses. In the example illustrated in Fig. 1a a connection may appropriately be made directly to the main connection clamps 2R, 2S and 2T via for example a fuse disconnecting switch.

## Claims

1. A distribution board for electrical installations, in which an incoming three-phase system (R, S, T) is distributed to single-phase and three-phase branch circuits, comprising a bus bar system which allows for a sequential alteration of the phases of adjacent connection points (7R, 7S, 7T); characterized in that the connection points are arranged at the intersections of a notional grid to form rows (RO) and columns (CO) of three-phase connection points (at 7R, 7S, 7T) and that the bus bar system includes bus bar elements (5R, 5S, 5T) for each of the three phases which run from an edge connection point diagonally to the adjacent connection point, so as to connect normally three, but in any case at least two, diagonally arranged connection points along the same straight line before possibly changing direction, so that the three phases (R, S, T) are alternated sequentially in the three-phase system, both along all the rows (RO) and all the columns (CO) of the connection points (at 7R, 7S, 7T).

2. A distribution board as claimed in Claim 1, characterized in that the distribution board (1, 13, 22) is designed as a complete module, the bus bar system being preconnected, and comprising fuse holders (14) and fuse elements (24, 25, 26).

3. A distribution board as claimed in Claims 1 or 2, characterized in that it comprises a bottom plate (1) of electrical insulating material carrying the bus bar system (5R, 5S, 5T) as well as a connection plate (13) which is arranged above the bus bar system (5R, 5S and 5T) and consists of electrical insulating material, and which further carries fuse element holders (14) with connection clamps (16) for the branch circuits as well as a top cover (22).

4. A distribution board as claimed in Claim 3, characterized in that the bus bars are carried by guiding studs (4RR, 4SS, 4TT) of different heights which are mounted on the bottom plate (1), the studs carrying bus bars belonging to the same phase having the same height but different from the stud height of the other phases so that the bus bars (5R or 5S or 5T) for each phase (R, S and T, respectively) extend in a plane, which is different from the planes of the other phases.

5. A distribution board as claimed in Claim 3 or 4, characterized in that on the bottom side of the connection plate (13) there are provided supporting studs (21) having a size and location being so adapted to the planes of the bus bars that they keep the bus bars (5R, 5S, 5T) in position on their guiding studs (4RR, 4SS, 4TT).

6. A distribution board as claimed in any of the Claims 3—5, characterized in that in the area of the bus bar carrying guiding studs (4RR, 4SS, 4TT) there is mounted a bimetallic disc (6) serving to provide a temperature dependent pressure against the bus bars (5R, 5S, 5T) from the guiding studs (4RR, 4SS, 4TT).

## Revendications

1. Tableau de distribution pour installations électriques dans lequel un système d'entrée triphasé (R, S, T) est distribué à des circuits de dérivation monophasés et triphasés, comprenant un système de barres omnibus qui permet une altération séquentielle des phases des points de connexion adjacents (7R, 7S, 7T), caractérisé en ce que les points de connexion sont agencés aux intersections d'une grille fictive pour former des rangées (RO) et des colonnes (CO) de points de connexion triphasés (7R, 7S, 7T) et en ce que le système de barres omnibus comprend des éléments de barres omnibus (5R, 5S, 5T) pour chacune des trois phases qui s'étendent à partir d'un point de connexion d'un bord diagonalement vers le point de connexion adjacent, de façon à connecter normalement trois, mais dans tous les cas au moins deux, points de connexion disposés diagonalement suivant la même ligne droite avant un changement possible de direction, de sorte que les trois phases (R, S, T) sont alternées séquentiellement dans le système triphasé, à la fois suivant toutes les rangées (RO) et toutes les colonnes (CO) de points de connexion (7R, 7S, 7T).

2. Tableau de distribution suivant la revendication 1, caractérisé en ce que le tableau de distribution (1, 13, 22) est conçu sous la forme d'un module complet, le système de barres omnibus étant préalablement connecté et comprenant des porte-fusibles (14) et des éléments fusibles (24, 25, 26).

3. Tableau de distribution suivant l'une quelconque des revendications 1 et 2, caractérisé en ce qu'il comprend une plaque de fond (1) en une matière électriquement isolante portant le système de barres omnibus (5R, 5S, 5T) ainsi qu'une plaque de connexion (13) qui est agencée au dessus du système de barres omnibus (5R, 5S, 5T) et consiste en une matière électriquement isolante, et qui porte en outre des éléments porte-fusibles (14) avec des organes de connexion (16) par serrage pour les circuits de dérivation ainsi qu'un couvercle supérieur (22).

4. Tableau de distribution suivant la revendication 3, caractérisé en ce que les barres omnibus sont portées par des goujons de guidage (4RR, 4SS, 4TT) de différentes hauteurs qui sont fixés sur la plaque de fond (1), les goujons portant les barres omnibus appartenant à la même phase ayant la même hauteur mais différente de la hauteur du goujon des autres phases de sorte que les barres omnibus (5R, 5S, 5T) pour chaque phase (R, S, T) respectivement s'étendent dans un plan qui est différent des plans des autres phases.

5. Tableau de distribution suivant l'une des revendications 3 ou 4, caractérisé en ce qu'il est prévu sur la face inférieure de la plaque de connexion (13) des goujons de support (21) ayant une dimension et une position qui sont adaptées aux plans des barres omnibus de façon à maintenir les barres omnibus (5R, 5S, 5T) en position sur leurs goujons de guidage (4RR, 4SS, 4TT).

6. Tableau de distribution suivant l'une quelconque des revendications 3 à 5, caractérisé en ce que dans la région des goujons de guidage (4RR, 4SS, 4TT) portant les barres omnibus est monté un disque bimétallique (6) servant à assurer une pression en fonction de la température contre les barres omnibus (5R, 5S, 5T) à partir des goujons de guidage (4RR, 4SS, 4TT).

**Patentansprüche**

1. Verteilertafel für elektrische Installationen, mit der ein ankommendes dreiphasiges System (R, S, T) auf einphasige und dreiphasige Zweigstromkreise aufgeteilt wird, mit einem Sammelschienensystem, das einen fortlaufenden Wechsel der Phasen benachbarter Verbindungspunkte (7R, 7S, 7T) ermöglicht, dadurch gekennzeichnet, daß die Verbindungspunkte an den Schnittstellen eines gedachten Gitters angeordnet sind und Reihen (RO) und Spalten (CO) von dreiphasigen Verbindungspunkten (bei 7R, 7S, 7T) bilden und daß das Sammelschienensystem Sammelschienenelemente (5R, 5S, 5T) für jede der drei Phasen aufweist, die von einem Verbindungspunkt am Rand diagonal zu dem benachbarten Verbindungspunkt verlaufen, um so normalerweise drei, aber in jedem Fall wenigstens zwei diagonal angeordnete Verbindungspunkte längs der gleichen geraden Linie zu verbinden, bevor eventuell eine Richtungsänderung erfolgt, so daß die drei Phasen (R, S, T) sowohl längs sämtlicher Reihen (RO) als auch längs sämtlicher Spalten (CO) der Verbindungspunkte (bei 7R, 7S, 7T) in dem dreiphasigen System fortlaufend wechseln.

2. Verteilertafel nach Anspruch 1, dadurch gekennzeichnet, daß die Verteilertafel (1, 13, 22) als vollständiges Modul ausgebildet ist, wobei das Sammelschienensystem vormontiert ist und Sicherungshalter (14) und Sicherungselemente (24, 25, 26) aufweist.

3. Verteilertafel nach Anspruch 1 oder 2, dadurch gekennzeichnet, daß sie eine Bodenplatte (1) aus elektrisch isolierendem Material welche das Sammelschienensystem (5R, 5S, 5T) trägt, eine Verbindungsplatte (13), die oberhalb des Sammelschienensystems (5R, 5S und 5T) angeordnet ist und aus elektrisch isolierendem Material besteht sowie des weiteren die Sicherungselementhalter (14) mit Verbindungsklemmen (16) für die Zweigstromkreise trägt, sowie einen oberen Deckel (22) aufweist.

4. Verteilertafel nach Anspruch 3, dadurch gekennzeichnet, daß die Sammelschienen durch Führungsstifte (4RR, 4SS, 4TT) unterschiedlicher Höhe getragen werden, die auf der Bodenplatte (1) befestigt sind, wobei die Stifte, welche die zu der gleichen Phase gehörenden Sammelschienen tragen, die gleiche Höhe haben, die sich aber von der Stifthöhe der anderen Phasen unterscheidet, so daß die Sammelschienen (5R oder 5S oder 5T) für jede Phase (R, S bzw. T) sich in einer Ebene erstrecken, die sich von den Ebenen der anderen Phasen unterscheidet.

5. Verteilertafel nach Anspruch 3 oder 4, dadurch gekennzeichnet, daß an der Unterseite der Verbindungsplatte (13) Stützstifte (21) vorgesehen sind, deren Größe und Anordnung den Ebenen der Sammelschienen derart angepaßt ist, daß sie die Sammelschienen (5R, 5S, 5T) auf ihren Führungsstiften (4RR, 4SS, 4TT) in ihrer Position halten.

6. Verteilertafel nach einem der Ansprüche 3 bis 5, dadurch gekennzeichnet, daß in dem Bereich der die Sammelschienen tragenden Führungsstifte (4RR, 4SS, 4TT) eine Bimetallscheibe (6) montiert ist, die dazu dient, einen temperaturabhängigen Druck von den Führungsstiften (4RR, 4SS, 4TT) auf die Sammelschienen (5R, 5S, 5T) auszuüben.

Fig. 1d

Fig. 1c

Fig. 1b

Fig. 1a